# EUROPEAN PATENT APPLICATION

(11) **EP 2 448 169 A1**
(43) Date of publication of application: **02.05.2012**
(21) Application number: 10805982.5
(22) Date of filing: 02.06.2010
(51) Int. Cl.: H04L 7/00

(54) **METHOD AND DEVICE FOR ADAPTIVE CLOCK RESTORATION**

(30) Priority: 03.08.2009 CN 200910162589
(71) Applicant: ZTE Corporation, Shenzhen, Guangdong 518057 (CN)
(72) Inventor: YIN, Jingpeng, Shenzhen Guangdong 518057 (CN)
(74) Representative: Thul, Stephan
(86) International application number: PCT/CN2010/073459
(87) International publication number: WO 2011/015078

(57) **Abstract**

A method for adaptive clock restoration is provided. The method includes: a step of encapsulating, which includes that an encapsulating module at the network entrance divides a real-time traffic into a plurality of data segments and encapsulates the plurality of data segments into a plurality of network packets and sequentially transmits the network packets to the network; a step of decapsulating, which includes that a decapsulating module at the network exit sequentially receives the network packets transmitted from the network, checks whether the network packets are consecutive or not, and if not, determines the number of lost packets and supplements network packets whose number is the same as that of the lost packets to an adaptive clock restoration module; as well as a step of clock restoration, which includes that the adaptive clock restoration module restores the clock according to the arrival rate of the network packet. A device for adaptive clock restoration is also provided in the present invention. The method and device in the present invention will not be affected by the lost packets in the network when restoring adaptive clock according to the network packet arrival rate, thus improving the accuracy of clock restoration.

## Description

### Technical Field

The present invention relates to applications of packet network bearing real-time services, and more especially, to a method and device for adaptive clock restoration.

### Background of the Related Art

Synchronous digital hierarchy (SDH) has now been proposed for 20 years and plays an important role as a main transmission technology in the telecommunication networks. However, the SDH is a transmission technology mechanism that is designed with the circuit services in which the voice service is a representative being as the objects, in the present, the IP is the leading service, thus the inadaptability of the SDH in efficiency, flexibility and other aspects has appeared, the telecommunication industry has started to research the next generation transmission network. To solve this problem, packet transport network (PTN) technology came into being, it supports a variety of packet switch-based bidirectional point-to-point connection channels, and it is adaptable to all kinds of granularity services and end-to-end networking capability, and provides a "soft" transmission pipeline which is more suitable for IP service features; the protection switching of the point-to-point connection channel can be completed within 50 milliseconds, and it can achieve the service protection and restoration at the transport level.

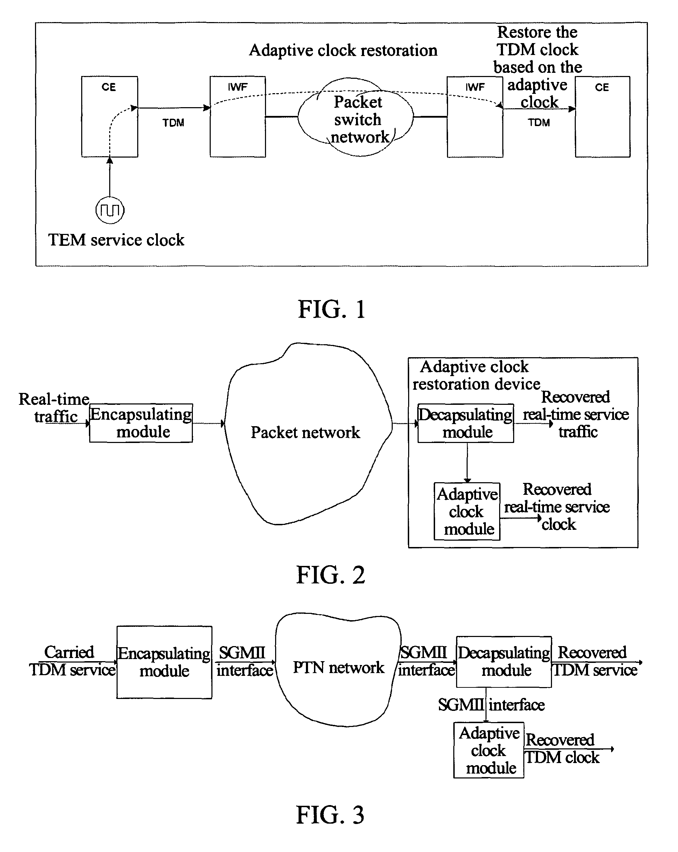

The development of the PTN technology must solve the problem of how to carry the traditional TDM service, and the key technology of the PTN network carrying the TDM service is how to restore the TDM service clock from the packet network. There are four clock restoration techniques, namely adaptive clock, differential clock, backhaul clock and system clock, and the ITU-T G. 8261 standard has relevant descriptions of these four clock restoration techniques. Adaptive clock is currently the main clock restoration technique in the industry, and the principle of the adaptive clock is as follows: at the entrance of PTN network, the Time Division Multiplexing (TDM) service to be carried is divided into data segments, and the divided data segments are encapsulated with a standard format into the bearing packets in the PTN network, the TDM service is sent in the form of packets to the remote in the network, at the exit of the PTN network, the TDM service is decapsulated from the packets, the TDM service clock is restored according to the packet arrival rate, and the clock is used to send the TDM service, as shown in FIG. 1.

Since the adaptive clock restores the TDM clock based on the packet arrival rate, the packet arrival rate in the ideal network is only determined by the TDM service clock at the entrance of the PTN network, thus the ideal network might be very easy to implement the adaptive clock restoration. However, the packet arrival rate is interfered by many factors in industry, and the main interference factors are network congestion, background traffic interference, extraordinary frame interference, network packet loss interference, and so on. ITU-T G.8261 standard has analyzed these factors in detail and it will not be specifically illustrated herein. The present specification analyzes the impact of the network packet loss on the adaptive clock in detail, and the network packet loss will result in lower packet arrival rate, since the adaptive clock cannot distinguish whether the packet arrival rate becoming lower is because the TDM service clock at the network entrance slows down or due to the network packet loss, the adaptive clock might mistake the lower packet arrival rate due to the network packet loss rate for the one due to the slower TDM service clock at the network entrance, thereby seriously affecting the performance of the adaptive clock, and with the current technology level, the adaptive clock specifications significantly deteriorates in the case of network packet loss.

### Summary of the Invention

To solve the technical problem, the present invention provides a method and device for adaptive clock restoration to avoid the impact of network packet loss and to improve the accuracy of clock recovery.

To solve the above technical problem, the present invention provides a device for adaptive clock restoration, and the device comprises a decapsulating module and an adaptive clock restoration module, wherein:
the decapsulating module is located at the network exit, and the decapsulating module is set to: sequentially receive a plurality of network packets which are encapsulated and sent after dividing the real-time traffic into a plurality of data segments at the network entrance, and check whether the network packets are consecutive or not, and determine the number of lost packets when the network packets are not consecutive, and supplement network packets whose number is the same as that of the lost packets to the adaptive clock restoration module;
the adaptive clock restoration module is set to: receive the network packets sent by the decapsulating module and restore the clock according to the network packet arrival rate.

The supplemented network packets whose number is the same as that of the lost packets are empty network packets or network packets with preset content.

The network packets sent at the network entrance carry packet serial numbers, and the packet serial numbers conform to a certain packet serial number rule;
the decapsulating module is set to check whether the network packets are consecutive or not by the following way: check whether the current network packet and the last network packet are consecutive or not according to the packet serial number rule, so as to check whether the network packets are consecutive or not;
the decapsulating module is set to determine the number of lost packets according to the packet serial number rule; and
the decapsulating module is also set to: when the network packets are consecutive, forward the current network packet to the adaptive clock restoration module.

The packet serial number rule means that the packet serial numbers increase regularly or the packet serial numbers decrease regularly.

The adaptive clock restoration module is also set to: filter the restored clock.

To solve the aforementioned technical problem, the present invention also provides a method for adaptive clock restoration, the method comprises:
a step of encapsulating, which comprises: an encapsulating module at the network entrance dividing a real-time traffic into a plurality of data segments, and encapsulating the plurality of data segments into a plurality of network packets and sequentially sending the network packets to the network;
a step of decapsulating, which comprises: the decapsulating module at the network exit sequentially receiving the network packets sent from the network, checking whether the network packets are consecutive or not, and determining the number of lost packets when the network packets are not consecutive, and supplementing network packets whose number is the same as that of the lost packets to the adaptive clock restoration module;
a step of clock restoration, which comprises: the adaptive clock restoration module restoring the clock based on the network packet arrival rate.

The supplemented network packets whose number is the same as that of the lost packets are empty network packets or network packets with preset content.

In the step of encapsulating, the network packets sent by the encapsulating module carry the packet serial numbers, and the packet serial numbers conform to a certain packet serial number rule;
in the step of decapsulating, the decapsulating module checks whether the current network packet and the last network packet are consecutive or not according to the packet serial number rule, so as to check whether the network packets are consecutive or not; and determines the number of lost packets according to the packet serial number rule;
the step of decapsulating also comprises: when the network packets are consecutive, forwarding the current network packet to the adaptive clock restoration module.

The packet serial number rule means that the packet serial numbers increase regularly or the packet serial numbers decrease regularly.
the step of adaptive clock restoration also comprises: filtering the restored clock after the adaptive clock restoration module restores the clock.

By carrying the packet serial numbers in the packets, the method and device of the present invention can check whether there is a packet lost or not according to the packet serial number, and timely supplement packets when there is a packet lost, therefore the adaptive clock restoration according to the packet arrival rate is not affected by the network packet loss, and the accuracy of the clock restoration is improved.

### Brief Description of Drawings

FIG. 1 is a schematic diagram of an adaptive clock restoration;
FIG. 2 is a diagram of a system for adaptive clock restoration in the present invention;
FIG. 3 is a diagram of an embodiment of the system for adaptive clock restoration in the present invention;
FIG. 4 is a diagram of the time interval of the decapsulating module receiving and forwarding the packets in the present invention;
FIG. 5 is a diagram of supplementing the packets when there is a packet lost in the present invention;
FIG. 6 is a flow chart of a method for adaptive clock restoration in the present invention.

### Preferred Embodiments of the Present Invention

The main idea of the method and device of the present invention is to: carry regular packet serial numbers in the network packets, and judge whether there is a packet lost or not by checking the packet serial number, when there is a packet lost, supplement packets according to the number of lost packets, so as to avoid the impact of the network packet loss on the adaptive clock, wherein, the packet is the data message.

As shown in FIG. 2, the adaptive clock restoration system of the present invention comprises an encapsulating module and an adaptive clock restoration device; wherein, the adaptive clock restoration device comprises a decapsulating module and an adaptive clock restoration module, wherein:
the encapsulating module is located at the packet network entrance, and the encapsulating module is set to: divide the real-time traffic into a plurality of data segments, and encapsualte the plurality of data segments into a plurality of network packets and sequentially send the packets;
the network packets sent by the encapsulating module carry the packet serial numbers, and the packet serial numbers conform to a certain packet serial number rule which means that the packet serial numbers increase regularly or decrease regularly.
the decapsulating module is located at the network exit, and the decapsulating module is set to: sequentially receive a plurality of network packets which are encapsulated and sent after dividing the real-time traffic into a plurality of data segments at the network entrance, and check whether the current network packet and the last network packet are consecutive or not according to the packet serial number rule, and if yes, forward the current network packet to the adaptive clock restoration module, otherwise, determine the number of lost packets according to the packet serial number rule, and supplement network packets whose number is the same as that of the lost packets to the adaptive clock restoration module;
the supplemented network packets are empty network packets or network packets with preset content.

The adaptive clock restoration module is set to: receive the network packets sent by the decapsulating module and restore the clock according to the arrival rate of the network packet.

The packet network might be a PTN network or any other packet network, and the real-time traffic is the TDM traffic. When the packet network is a PTN network, the encapsulating module and the decapsulating module connect with the PTN network via the SGMII interface, the decapsulating module and the adaptive clock restoration module are connected via the SGMII interface, the encapsulating module, the decapsulating module and the adaptive clock restoration module can be implemented with the FPGA on the board, as shown in FIG. 3.

The adaptive clock restoration module filters the restored clock.

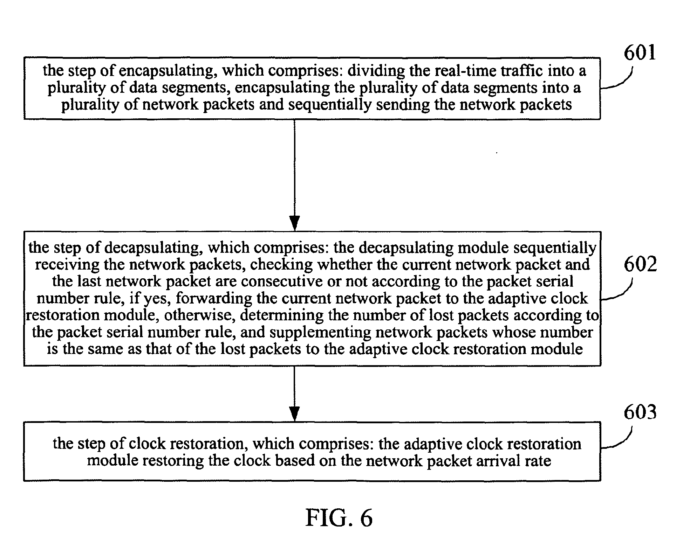

The adaptive clock restoration method implemented based on the aforementioned system is shown as FIG. 6, and the method comprises the following steps:
Step 601, the step of encapsulating, which comprises: dividing the real-time traffic into a plurality of data segments, encapsulating the plurality of data segments into a plurality of network packets and sequentially sending the network packets;
   as the above description, the network packets sent by the encapsulating module carry the packet serial numbers, and the packet serial numbers conform to a certain packet serial number rule which means that the packet serial numbers increase regularly or decrease regularly.
Step 602, the step of decapsulating, which comprises: the decapsulating module sequentially receiving the network packets, checking whether the current network packet and the last network packet are consecutive or not according to the packet serial number rule, if yes, forwarding the current network packet to the adaptive clock restoration module, otherwise, determining the number of lost packets according to the packet serial number rule, and supplementing network packets whose number is the same as that of the lost packets to the adaptive clock restoration module;
   the supplemented network packets are empty network packets or network packets with preset content.
Step 603, the step of clock restoration, which comprises: the adaptive clock restoration module restoring the clock based on the network packet arrival rate.

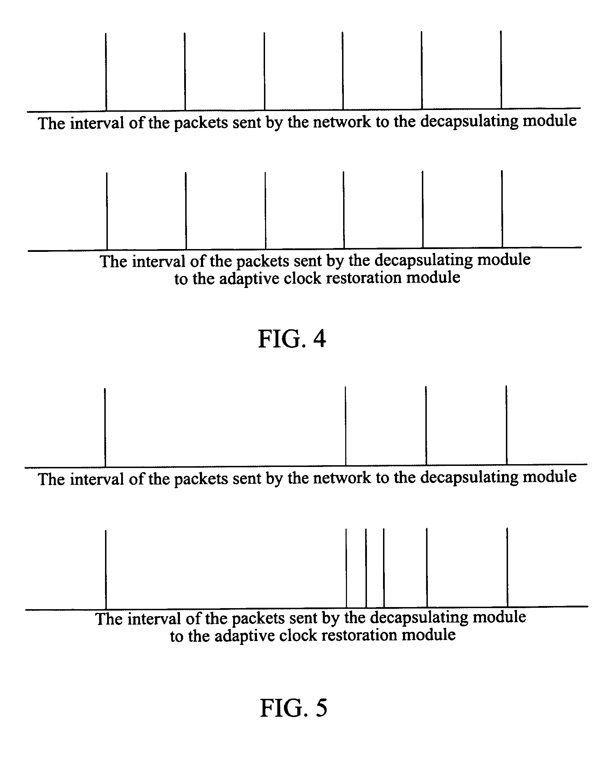

In the following, the PTN network carrying the TDM service is taken for example to describe the adaptive clock restoration method of the present invention in detail, specifically comprising:
step 1: the encapsulating module receives the TDM service that needs to be carried, and divides the continuous TDM traffic into a plurality of data segments with the same size, and eancapsulates the divided data segments into the PTN network packets according to the standard format, and sends the packets to the PTN network via the SGMII interface;
   Table 1 shows the encapsulated PTN network packet format in the present invention, wherein, the field of Sequence Number in the network packet indicates the packet serial number, in this embodiment, the serial number increasing regularly is taken for example to illustrate, the serial numbers start from 0, up to 65535 and then back to 0; 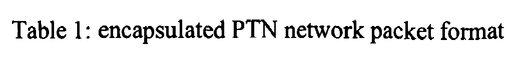 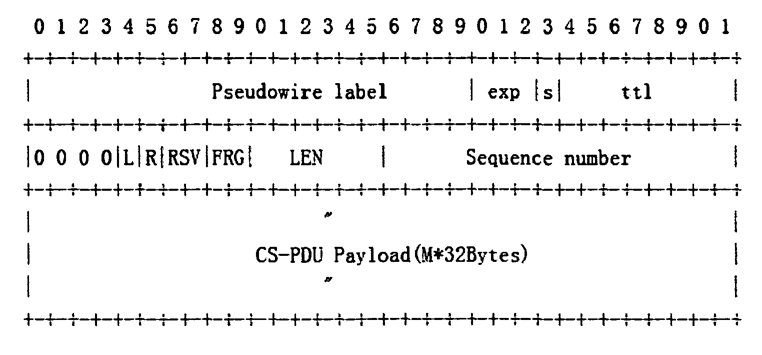
Step 2: the decapsulating module receives packets from the PTN network via the SGMII interface, and restores the TDM service from the packets, meanwhile, uses the SGMII interface to send the packets to the adaptive clock restoration module to restore the clock, the decapsulating module checks whether the serial numbers of the received packets increase regularly or not, and if yes, it means that there is no packet lost in the network, if the serial numbers of the received adjacent two packet are not consecutive, it means that there is a packet lost in the network, and according to the difference of the adjacent two packet serial numbers, the number of lost packets can be calculated, once it determines that there is a packet lost in the network, the decapsulating module automatically supplements packets to the adaptive clock restoration module, and the number of the supplemented packets is the same as that of the lost packets in the network;
   When there is no packet lost in the network, the serial numbers of the packets received by the decapsulating module must increase gradually, and the time interval of the adjacent two packets received by the decapsulating module is substantially the same as that of the adjacent two packets forwarded by the decapsulating module to the adaptive clock restoration module, as shown in FIG. 4.
   If there is a packet lost in the network, the serial numbers of the adjacent two packets received by the decapsulating module are not consecutive, for example, the serial number of the current network packet received by the decapsulating module is 103, the packet serial number of the last packet is 101, it means that there is a packet lost in the network, and there are two packets lost. The decapsulating module automatically inserts two packets whose serial numbers are 101 and 102 to the adaptive clock restoration module before forwarding the packet with the serial number of 103 to the adaptive clock restoration module, as shown in FIG. 5.
Step 3: the adaptive clock restoration module receives packets from the decapsulating module, and restores the TDM clock according to the packet arrival rate, since the decapsulating module will automatically supplement the packets lost in the network to the adaptive clock restoration module when there is a packet lost in the network, the adaptive clock restoration module cannot feel the packet loss in the network.

It can be seen from FIG. 5 that, after the decapsulating module supplements the packets, the arrival time intervals of the packets at the entrance of the adaptive clock restoration module are not uniform, that is, the packet supplementation leads to packet jitter which also affects the adaptive clock restoration, fortunately, compared with the impact of packet loss, the impact of the packet jitter is much less, therefore, the adaptive clock restoration module needs to filter the network jitter with an algorithm.

By carrying the packet serial number into the packet, the method and device of the present invention can check whether there is a packet lost or not according to the packet arrival rate, and timely supplement the packets when there is a packet lost, so that the adaptive clock restoration according to the packet arrival rate will not be affected by the network packet loss, that is, the norms of the restored clock still maintain normal in the case of network packet loss, thus improving the accuracy of the clock restoration.

### Industrial Applicability

By carrying the packet serial number in the packet, the method and device of the present invention can check whether there is a packet lost or not according to the packet arrival rate, and timely supplement the packets when there is a packet lost, so that the adaptive clock restoration according to the packet arrival rate will not be affected by the network packet loss, thus improving the accuracy of the clock restoration.

## Claims

1. A device for an adaptive clock restoration, comprising a decapsulating module and an adaptive clock restoration module, wherein:
the decapsulating module is located at a network exit, and the decapsulating module is set to: sequentially receive a plurality of network packets which are encapsulated and sent after dividing a real-time traffic into a plurality of data segments at a network entrance, and check whether the network packets are consecutive or not, and determine a number of lost packets when the network packets are not consecutive, and supplement network packets whose number is the same as that of the lost packets to the adaptive clock restoration module;
the adaptive clock restoration module is set to: receive the network packets sent by the decapsulating module and restore a clock according to an arrival rate of the network packet.

2. The device of claim 1, wherein, the supplemented network packets whose number is the same as that of the lost packets are empty network packets or network packets with preset content.

3. The device of claim 1, wherein,
the network packets sent at the network entrance carry packet serial numbers, and the packet serial numbers conform to a certain packet serial number rule;
the decapsulating module is set to check whether the network packets are consecutive or not with a following way: checking whether a current network packet and a last network packet are consecutive or not according to the packet serial number rule so as to check whether the network packets are consecutive or not;
the decapsulating module is set to determine the number of lost packets according to the packet serial number rule; and
the decapsulating module is also set to forward the current network packet to the adaptive clock restoration module when the network packets are consecutive.

4. The device of claim 3, wherein, the packet serial number rule means that the packet serial numbers increase regularly or the packet serial numbers decrease regularly.

5. The device of any one of claims 1∼4, wherein, the adaptive clock restoration module is also set to filter the restored clock.

6. A method for an adaptive clock restoration, comprising:
a step of encapsulating, which comprises: an encapsulating module at a network entrance dividing a real-time traffic into a plurality of data segments, encapsulating the plurality of data segments into a plurality of network packets and sequentially sending the network packets to the network;
a step of decapsulating, which comprises: a decapsulating module at a network exit sequentially receiving the network packets sent from the network, checking whether the network packets are consecutive or not, determining a number of lost packets when the network packets are not consecutive, and supplementing network packet whose number is the same as that of the lost packets to an adaptive clock restoration module;
a step of clock restoration, which comprises: the adaptive clock restoration module restoring a clock based on an arrival rate of the network packet.

7. The method of claim 6, wherein, the supplemented network packets whose number is the same as that of the lost packets are empty network packets or network packets with preset content.

8. The method of claim 6, wherein:
in the step of encapsulating, the network packets sent by the encapsulating module carry packet serial numbers, and the packet serial numbers conform to a certain packet serial number rule;
in the step of decapsulating, the decapsulating module checks whether a current network packet and a last network packet are consecutive or not according to the packet serial number rule so as to check whether the network packets are consecutive or not; and determine the number of the lost packets according to the packet serial number rule;
the step of decapsulating also comprises: forwarding the current network packet to the adaptive clock restoration module when the network packets are consecutive.

9. The method of claim 8, wherein, the packet serial number rule means that the packet serial numbers increase regularly or the packet serial numbers decrease regularly.

10. The method of any one of claims 6∼8, wherein, the step of adaptive clock restoration also comprises: filtering the restored clock after the adaptive clock restoration module restores the clock.
